Europäisches Patentamt

European Patent Office

Office européen des brevets

(11) Veröffentlichungsnummer: **0 268 740**
**A2**

(12) # EUROPÄISCHE PATENTANMELDUNG

(21) Anmeldenummer: **87110215.8**

(22) Anmeldetag: **15.07.87**

(51) Int. Cl.⁴: **G01L 3/22**

(30) Priorität: **28.11.86 DE 3640777**

(43) Veröffentlichungstag der Anmeldung:
**01.06.88 Patentblatt 88/22**

(84) Benannte Vertragsstaaten:
**AT BE CH DE ES FR GB GR IT LI LU NL SE**

(71) Anmelder: **ROBERT BOSCH GMBH**
**Postfach 50**
**D-7000 Stuttgart 1(DE)**

(72) Erfinder: **Richter, Günter, Dipl.-Ing.**
**Niedstrasse 26**
**D-1000 Berlin 41(DE)**

(74) Vertreter: **Schmidt, Hans-Ekhardt**
**Robert Bosch GmbH Geschäftsbereich**
**Elektronik Patent- und Lizenzabteilung**
**Forckenbeckstrasse 9-13**
**D-1000 Berlin 33(DE)**

(54) **Drehmoment-Messvorrichtung.**

(57) Es wird eine Drehmoment-Meßvorrichtung mit einer Wirbelstrombremse vorgeschlagen. Die Drehmoment-Meßvorrichtung vermeidet die Nachteile bekannter Meßvorrichtungen, wie zum Beispiel die Temperaturabhängigkeit, die Speisespannungsabhängigkeit, die Empfindlichkeit gegenüber Feuchtigkeit sowie die Anfälligkeit hinsichtlich einer mechanischen Abnutzung. Die Drehmoment-Meßvorrichtung besteht aus einem Läufer (11), der einen Geber (20) trägt. Der Geber passiert bei jeder Umdrehung des Läufers einen ersten, raumfesten Sensor (21) sowie einen zweiten, an dem Spulenjoch (12) befestigten Sensor (17). Dabei werden jeweils in den Sensoren elektrische Impulse ($I_{10}$, $I_{20}$) erzeugt, deren zeitlicher Abstand ($\Delta t$) vom Spulenstrom und der Kraft einer Feder (23), die die Drehbewegung des Spulenjochs (12) beschränkt, abhängt. Der Abstand ($\Delta t$) zweier aufeinanderfolgender Impulse ($I_{10}$, $I_{20}$; $I_{10}$, $I_{30}$) ist ein Maß für das an der Antriebsvorrichtung (14, 15) aufgebrachte Drehmoment ($M_d$). Die Linearisierung des Meßsystems erfolgt über Kalibriertabellen, die in einem Speicher einer Mikroprozessorschaltung abgelegt sind.

Fig. 3

## Drehmoment-Meßvorrichtung

### Stand der Technik

Die Erfindung geht von einer Drehmoment-Meßvorrichtung nach der Gattung des Hauptanspruchs aus.

Es ist ein Ergometer bekannt (DE-OS 31 39 056), das eine Wirbelstrombremseinrichtung aufweist. In einer Rechner-und Prozessorschaltung ist die Abhängigkeit des Drehmoments vom Bremsstrom und von der Drehzahl gespeichert. Anhand eines an einer Einstellvorrichtung eingestellten Leistungs-Sollwertes und der von dem Probanden erzeugten Drehzahl des Rotors der Wirbelstrombremseinrichtung ermittelt die Rechner-und Prozessorschaltung den Bremsstrom. Derartige, ohne eine Kraftmessung arbeitende Ergometer haben ebenso wie Ergometer mit Dehnungsmeßstreifen zur Drehmomentabnahme verschiedene Nachteile, wie zum Beispiel eine durch die Analogmessung bedingte Temperatur-und Speisespannungsabhängigkeit sowie eine Empfindlichkeit gegenüber Feuchtigkeit und eine Neigung zu einer mechanischen Abnutzung.

### Vorteile der Erfindung

Die erfindungsgemäße Drehmoment-Meßvorrichtung mit den kennzeichnenden Merkmalen des Hauptanspruchs hat den Vorteil, daß durch die Anwendung eines rein digital arbeitenden Meßprinzips die analogen Meßverfahren anhaftenden Nachteile vermieden werden.

Durch die in den Unteransprüchen aufgeführten Maßnahmen sind vorteilhafte Weiterbildungen und Verbesserungen der in dem Hauptanspruch angegebenen Drehmoment-Meßvorrichtung möglich. Besonders vorteilhaft ist eine erfindungsgemäße Drehmoment-Meßvorrichtung, bei der der Geber ein Permanentmagnet ist und die Sensoren Spulen oder Halbleiter-Sensoren sind. Dadurch wird bei geringstem Aufwand eine Geber-Sensor-Anordnung geschaffen, die mechanisch, elektrisch und feuchtigkeitsunempfindlich ist.

### Zeichnung

Ein Ausführungsbeispiel der Erfindung wird in der Zeichnung anhand mehrerer Figuren dargestellt und in der nachfolgenden Beschreibung näher erläutert. Die Zeichnung zeigt in

Fig. 1 eine Ansicht einer erfindungsgemäßen Drehmoment-Meßvorrichtung,

Fig. 2 eine Schnittansicht der Drehmoment-Meßvorrichtung nach Fig. 1,

Fig. 3 eine Ansicht wie in Fig. 1 zur Verdeutlichung der Anordnung von Geber und Sensoren und

Fig. 4 die Abhängigkeit der Sensorspannungen von der Zeit.

### Beschreibung der Erfindung

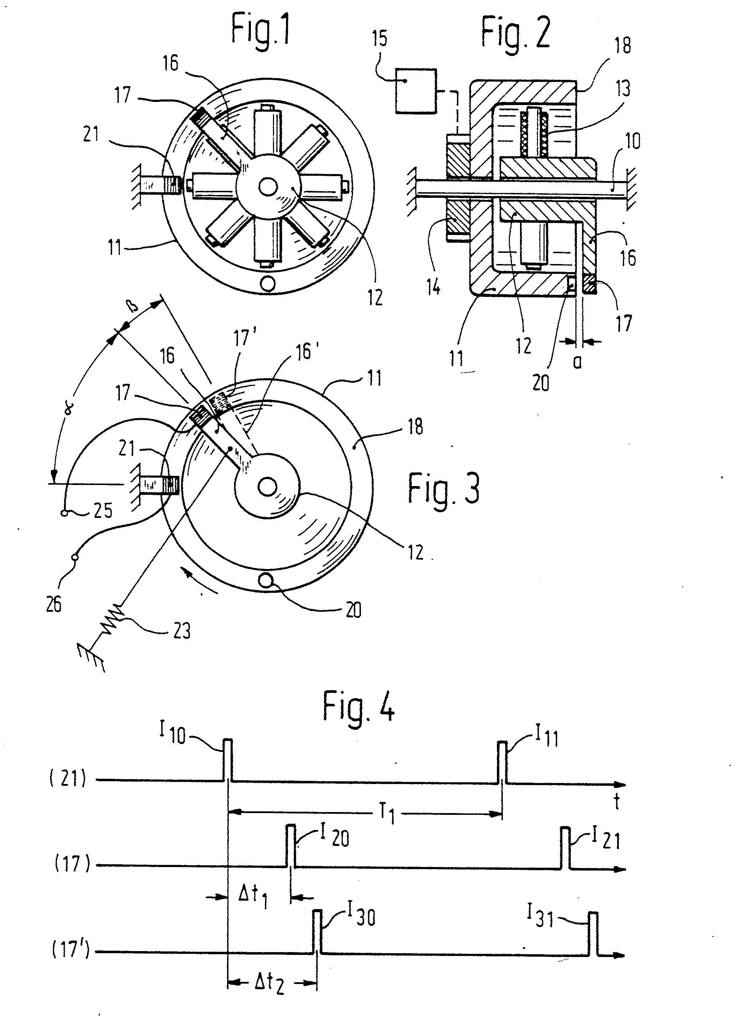

Die in den Fig. 1 bis 3 gezeigte Drehmoment-Meßvorrichtung weist eine feststehende Welle 10 auf, auf der ein topfförmiger Läufer 11 aus elektrisch leitendem Material und ein Spulenjoch 12 mit zum Beispiel sechs Spulen 13 drehbar angeordnet sind. Mit dem Läufer 11 ist ein Antriebsritzel 14 fest verbunden, das mit einer Antriebseinheit 15 zum Beispiel nach Art einer Fahrradkurbel gekuppelt ist. Derartige Antriebseinheiten sind dem Fachmann durch Fahrrad-Ergometer bekannt; sie werden deshalb in diesem Zusammenhang nicht weiter erläutert.

Zu dem Läufer 12 gehört ein radialer Sensorarm 16, der an seinem freien Ende einen ersten Sensor 17, vorzugsweise in Form eines Halbleiter-Hall-Sensors, trägt. Der topfförmige Läufer 11 weist an seiner an der offenen Seite des Topfes befindlichen Stirnseite 18 einen Geber 20, vorzugsweise in Form eines Permanentmagneten auf. Ein zweiter Sensor 21 ist derart raumfest angeordnet, daß an ihm, wie in Fig. 3 gezeigt, der Geber 20 des sich in Pfeilrichtung drehenden Läufers 11 vorbeiläuft. Die Drehbewegung des Spulenjochs 12 wird durch eine Rückstellfeder 23 beschränkt, deren eines Ende mit einem raumfesten Punkt und deren anderes Ende mit dem Sensorarm 16 verbunden ist. Der axiale Abstand a (Fig. 2) des ersten Sensors 17 von dem Geber 20 ist vorzugsweise genauso groß wie der axiale Abstand zwischen dem zweiten Sensor 21 von dem Geber 20. Der Winkel α zwischen dem zweiten Sensor 21 und der Leerlauf-Grundstellung des Sensorarms 16 ist mechanisch bedingt und kennzeichnet die Ruhelage. Die Anschlüsse der Sensoren 17 und 21 sind mit 25 und 26 bezeichnet.

Die Wirkungsweise der vorstehend beschriebenen Drehmoment-Meßvorrichtung ist folgende.

Versetzt zum Beispiel ein Proband über die Antriebsvorrichtung 15 und das Ritzel 14 den Läufer 11 in eine Drehbewegung, so wird das Spulenjoch 12 - sofern durch dessen Spulen 13 kein Strom fließt (Leerlauf) - nicht mitgenommen. Es nimmt dann seine in Fig. 3 gezeigte Ruhelage ein, in welcher der Winkel zwischen den Sensoren 17 und 21 $\alpha°$ beträgt. Fließt durch die Spulen 13 ein entsprechend der Belastung des Probanden eingestellter Strom, so werden in dem Läufer 11 Wirbelströme verursacht, die zu einer Kupplung zwischen Läufer und Spulenjoch führen. Dabei bewirkt jedoch die Rückstellfeder 23, daß das Spulenjoch 12 nur um einen geringen Teil einer Umdrehung geschwenkt werden kann. Bei einer von dem Probanden erreichten Drehzahl n des Läufers 11 und einem bestimmten Spulenstrom ergibt sich ein bestimmter Verdrehwinkel $\beta$ (Fig. 3), um den der Sensorarm 16 entgegen der Kraft der Rückstellfeder 23 ausgelenkt wird; vgl. in Fig. 3 gestrichelt eingezeichnete Position 16'.

Zur Messung des von dem Probanden aufgebrachten Drehmoments $M_d$ bzw. der Leistung $P_B$ wird von einer Zeitmessung ausgegangen entsprechend der Beziehung:

$$P_B = M_d \cdot 2\pi \cdot n = k \left( \frac{T_M}{T_N} - \frac{T_\Phi}{T_N} \right) \frac{1}{T_N}$$

In dieser Beziehung bedeuten:

$P_B$ von dem Probanden an der Antriebsvorrichtung 15 aufgebrachte Leistung

$M_d$ von dem Probanden aufgebrachtes Drehmoment

n Drehzahl in Umdrehungen pro Minute

k Federkonstante der Rückstellfeder 23 und Konstante $2\pi$

$T_M$ Differenz zwischen den Zeitpunkten, zu denen der Geber 20 den zweiten und ersten Sensor 21, 17 passiert

$T_N$ Differenz zwischen zwei aufeinanderfolgenden Zeitpunkten, zu denen der Geber 20 den zweiten Sensor 21 passiert.

$T_\Phi$ Differenz wie bei $T_M$, jedoch bei stromlosen Spulen 13.

Jedesmal, wenn der Geber 20 einen der Sensoren 21 bzw. 17 oder 17' passiert, wird· in dem betreffenden Sensor ein Impuls erzeugt; vgl. Fig. 4. Der obere Impulsverlauf zeigt die in dem zweiten Sensor 21 auftretenden Impulse $I_{10}$ and $I_{11}$ bei einer vollen Umdrehung des Läufers 11. Der Abstand zwischen den Impulsen $I_{10}$ und $I_{11}$ entspricht der Zeit $T_1$ für eine Umdrehung des Läufers.

Der mittlere Impulsverlauf in Fig. 4 zeigt, daß die Impulse $I_{20}$ und $I_{21}$ des ersten Sensors 17 zeitlich um $\Delta t_1$ gegenüber den Impulsen $I_{10}$ and $I_{11}$ versetzt sind. Diese Zeitdifferenz $\Delta t_1$ entspricht dem Leerlaufverhalten der Drehmoment-Meßvorrichtung, das heißt bei stromlosen Spulen 13. Der untere Impulsverlauf in Fig. 4 zeigt, daß die Impulse $I_{30}$ und $I_{31}$ des Sensors 17' um $\Delta t_2$ gegenüber den Impulsen $I_{10}$ und $I_{11}$ versetzt sind. Die Zeitdifferenz $\Delta t_2$ hängt unter anderem von der Größe des durch die Spulen 13 fließenden Stroms ab. Mit zunehmendem Strom wird das Mitnahmemoment zwischen dem Läufer 11 und dem Spulenjoch 12 erhöht und dadurch der Sensorarm 16 zum Beispiel in die in Fig. 3 gestrichelt angedeutete Position 16' ausgelenkt.

Die vorstehend erwähnten Impulse I stehen an den Spulenanschlüssen 25 und 26 zur Auswertung zur Verfügung.

Die Auswertung der Impulse I bzw. die Quotientenbildung

$$\frac{T_M}{T_N}, \quad \frac{T_\Phi}{T_N}, \quad \frac{1}{T_N}$$

erfolgt in dem Fachmann bekannter Weise mittels Digitalschaltungen, vorzugsweise prozessorgesteuert. Dabei wird die Zeitmessung auf eine Impulszählung zurückgeführt, die mit sehr hoher Genauigkeit ausgeführt werden kann.

Die mechanische Anordnung der Rückstellfeder 23 bedingt, daß das Verdrehmoment nicht linear vom Verdrehwinkel $\beta$ abhängt. Diese Nichtlinearität wird durch Kalibrierung mittels einer in einem Speicher einer Mikroprozessorschaltung abgelegten Tabelle ausgeglichen. Die Ausführung erfolgt analog zu der in der DE-OS 31 39 056 beschriebenen Kompensationsmaßnahme, bei der die Abhängigkeit des Drehmoments der Bremseinrichtung von dem Bremsstrom gespeichert ist. Durch geeignete Anordnung der Federaufhängung kann so im Bereich kleiner Kräfte eine höhere Auflösung erreicht werden.

Anstelle der in der vorstehenden Beschreibung erwähnten Spulen-Sensoren 17 und 21 und des permanentmagnetischen Gebers 20 können auch eine Lichtquelle als Geber 20 und lichtempfindliche Widerstände als Sensoren 17, 21 verwendet werden.

## Ansprüche

1. Drehmoment-Meßvorrichtung mit einer Wirbelstrombremse, die einen mit einer Antriebsvorrichtung verbundenen Läufer und ein drehbares Spulenjoch aufweist, das durch in dem Läufer induzierte Wirbelströme entgegen der Kraft einer Feder gedreht wird, dadurch gekennzeichnet, daß auf dem Läufer (11) ein Geber (20) befestigt ist, der bei jeder Umdrehung des Läufers einen zweiten, raumfesten Sensor (21) sowie einen ersten, an dem Spulenjoch (12) befestigten Sensor (17) passiert und in den Sensoren elektrische Impulse ($I_{10}$, $I_{20}$) erzeugt, deren zeitlicher Abstand ($\Delta t$) digital gemessen wird und ein Maß für das durch die Antriebsvorrichtung (14, 15) aufgebrachte Drehmoment ($M_d$) ist, und daß die Nichtlinearität des Meßsystems durch eine Kalibriertabelle im Speicher einer zu der Meßvorrichtung gehörenden Mikroprozessorschaltung ausgeglichen wird.

2. Drehmoment-Meßvorrichtung nach Anspruch 1, dadurch gekennzeichnet, daß der Läufer (11) topfförmig ausgebildet und ebenso wie das Spulenjoch (12) auf einer feststehenden Welle (10) frei drehbar angeordnet ist und daß das Spulenjoch innerhalb des Läufers untergebracht ist.

3. Drehmoment-Meßvorrichtung nach Anspruch 1 oder 2, dadurch gekennzeichnet, daß mit dem Spulenjoch (12) ein radialer Sensorarm (16) fest verbunden ist, dessen freies Ende den ersten Sensor (17) trägt, und daß der zweite Sensor (21) in einem bestimmten Winkelabstand ($\alpha$) in Laufrichtung des Gebers (20) vor dem ersten Sensor (17) angeordnet ist.

4. Drehmoment-Meßvorrichtung nach einem der Ansprüche 1 bis 3, dadurch gekennzeichnet, daß der Geber (20) ein Permanentmagnet ist und die Sensoren (17, 21) Spulen oder Halbleiter-Sensoren sind.

5. Drehmoment-Meßvorrichtung nach einem der Ansprüche 1 bis 3, dadurch gekennzeichnet, daß der Geber (20) eine Lichtquelle und die Sensoren (17, 21) lichtempfindliche Widerstände sind.

# Fig.1

# Fig. 2

# Fig. 3

# Fig. 4